Europäisches Patentamt

European Patent Office

Office européen des brevets

(11) Publication number: **0 119 659**
**B1**

## EUROPEAN PATENT SPECIFICATION

(45) Date of publication of patent specification: **21.09.88**

(21) Application number: **84200363.4**

(22) Date of filing: **14.03.84**

(51) Int. Cl.⁴: **A 01 D 43/08,** A 01 D 89/00

(54) **Forage harvesters.**

(30) Priority: **17.03.83 GB 8307441**

(43) Date of publication of application:
**26.09.84 Bulletin 84/39**

(45) Publication of the grant of the patent:
**21.09.88 Bulletin 88/38**

(84) Designated Contracting States:
**DE FR GB**

(56) References cited:
**EP-A-0 014 854**
**FR-A-2 517 926**
**GB-A-1 057 223**

(73) Proprietor: **FORD NEW HOLLAND N.V.**
**Leon Claeysstraat 3a**
**B-8210 Zedelgem (BE)**

(72) Inventor: **Mortier, Frans H.**
**Buurtstraat 12B**
**B-9990 Maldegem (BE)**

(74) Representative: **Vandenbroucke, Alberic T.J.**
**et al**
**SPERRY NEW HOLLAND DIVISION OF SPERRY**
**N.V. Leon Claeysstraat, 3A**
**B-8210 Zedelgem (BE)**

Courier Press, Leamington Spa, England.

## Description

This invention relates to forage harvesters either of the selfpropelled type or the pull type.

Forage harvesters typically comprise some form of crop receiving means which gathers either standing or windrowed crop material and feeds it to an auger structure including an auger disposed in cooperative relationship with an auger trough and which consolidates the material and feeds it to a cutterhead either directly, in the case of a so-called "fine chop" machine, or indirectly, in the case of a so-called "precision chop" machine. The feeding of crop material to the cutterhead needs to be optimised in order to maximise the capacity and efficiency of the machine. In known forage harvesters this is rarely achieved because the crop receiving means and the auger structure jointly are pivotable between operative and transport positions and in order to be able to raise the auger structure, together with the crop receiving means, to the transport position about the pivot axis, sufficient spacing has to be allowed between the auger structure and the cutterhead, or feed rolls in the case of a "precision chop" machine. This inevitably means that the auger structure, in the operative position, is spaced further from the cutterhead or feed rolls than the optimum requires which thus destracts from the efficient operation of the forage harvester. A forage harvester of this type is illustrated in US-A-3.925.971.

In an attempt to overcome this problem it has already been suggested to provide a forage harvester with an auger structure which in operation of the machine is basically fixedly positioned relative to the frame of the machine (save for the ability of the auger to move a minimal distance relative to the auger trough when lumps of crop material are encountered), whereby the auger structure can be provided at the optimum position relative to the cutterhead, respectively the feed rolls. This machine further also comprises a crop receiving means which is pivotally mounted relative to the auger structure. This pivotal mounting is provided in the proximity of and below the leading edge of the auger trough whereby the crop receiving means normally is permitted in use, to follow the ground contour. However, this pivotal mounting does not permit said crop receiving means to be lifted to a sufficient height above the ground level for transport purposes unless the crop receiving means were provided at a greater distance from the auger structure than is desirable for obtaining an optimum feeding. Such substantial lifting of the crop receiving means normally is prevented because of said means fouling the auger structure upon such lifting. As a consequence separate provisions have to be made for bringing the forage harvester in a transport position. This inevitably results in a further complication of the design.

Additionally, in case the crop receiving means of such a forage harvester is in the form of a conventional pick-up device, the feeding characteristics thereof often are less than ideal due to the fact that the discharge end of the pick-up device often is positioned below the leading edge of the auger trough whereby this auger trough leading edge forms an obstruction to the flow of crop material. This less than ideal arrangement results from the necessity of the pick-up device, in use, to be able to pivot around said pivotal mounting without fouling the auger structure and in particular, the auger trough thereof.

A forage harvester of this type is disclosed in GB-A-I.057.233.

It thus is the objective of the present invention to optimise in a forage harvester of the type having an auger structure, the feeding of thie crop material to the cutterhead in order to maximise the capacity and efficiency of the machine and yet to have a machine which is simple in design and therefore also relatively inexpensive to manufacture.

According to the invention, a forage harvester is provided which comprises:
- a frame
- a cutterhead mounted on the frame
- an auger structure including an auger trough fixedly positioned on the frame and an auger rotatably mounted on the frame and cooperable with the auger trough to consolidate crop material transversely of the machine and to deliver said crop material rearwardly of the machine for processing by the cutterhead and
- a crop receiving means provided at a location generally in front of and in proximity to the leading edge of the auger trough and mounted for pivotal movement about a pivot axis on the frame and relative to the auger structure in a manner to permit, in use, said crop receiving means to follow the ground contour while receiving crop material from the ground and delivering it to the auger structure and which is characterised in that the pivot axis of said crop receiving means is provided rearwardly of the auger in a manner to permit the crop receiving means both to be disposed in an efficient working relationship with the auger structure when in the operative position and to be pivoted about said pivot axis to a raised transport position without fouling the auger structure by virtue said pivotal movement of the crop receiving means between the operative and transport positions being substantially rectilinear.

Preferably the crop receiving means is arranged such that, when positioned in its operative position, it has its discharge end in close proximity to and slightly above the level of the forward edge of the auger trough. Also, the forward edge of the auger trough preferably is disposed below and between the leading edge of the auger and the axis of rotation of the auger. More particularly, the leading edge of the auger trough may be disposed generally vertically below the leading edge of the auger tube to which the auger flights are attached.

The crop receiving means may be mounted for pivotal movement on the machine frame through the intermediary of a mounting frame including a pair of arms extending between the pivot axis and said crop receiving means. Said pivot axis may be positioned on the machine frame such that, when the crop receiving means is in the operative position, said arms extend forwardly and downwardly from said pivot axis. The arms of the mounting frame may be interconnected at their ends remote from the pivot axis by a mounting bracket for the crop receiving means and said mounting bracket may have a flange for supporting the crop receiving means. Releasable connector means may be provided on the mounting bracket and the crop receiving means to removably attach the crop receiving means to the mounting bracket whereby the type of crop receiving means may be readily change to that required for a particular harvesting operation.

The arms of the mounting frame are preferably extended rearwardly by a distance shorter than the length of the arms, and compensation means provided between the extensions and the frame of the machine, the arrangement being such that for a given pivotal movement of the crop receiving means there is a smaller movement of the extensions, whereby the compensation characteristics of the compensation means remain substantially constant.

The auger may be pivotally mounted relative to the trough to accomodate, in use, any lumps of crop material delivered from the crop receiving means and to this end, the auger may be mounted between a pair of arms which rotatably receive the auger at one end and which are pivotally attached to the frame at the other end. However, it should be noted that the auger is essentially fixed relative to the other components except for the crop receiving means and save for the ability to undergo a small movement relative to the trough. The pivot axis of the crop receiving means conveniently is disposed generally vertically below the pivot axis of the auger in order to simplify the layout of the drive to these two components.

Forage harvesters constructed in accordance with the present invention will now be described in greater detail, by way of example, with reference to the accompanying drawings, in which:

Figure 1 is a schematic side view of one forage harvester,

Figure 2 is a view generally similar to that of Figure 1 but showing certain components in alternative positions,

Figure 3 is an enlarged view of a portion of Figure 1,

Figure 4 is a plan view of Figure 1 showing certain drives,

Figure 5 is a view similar to that of Figure 4 but omitting some drives and showing others, and showing certain components in alternative positions,

Figure 6 is a detail of a component of the forage harvester of Figure 1, and

Figures 7 to 9 are similar to that of Figure 1 but show alternative embodiments of the invention.

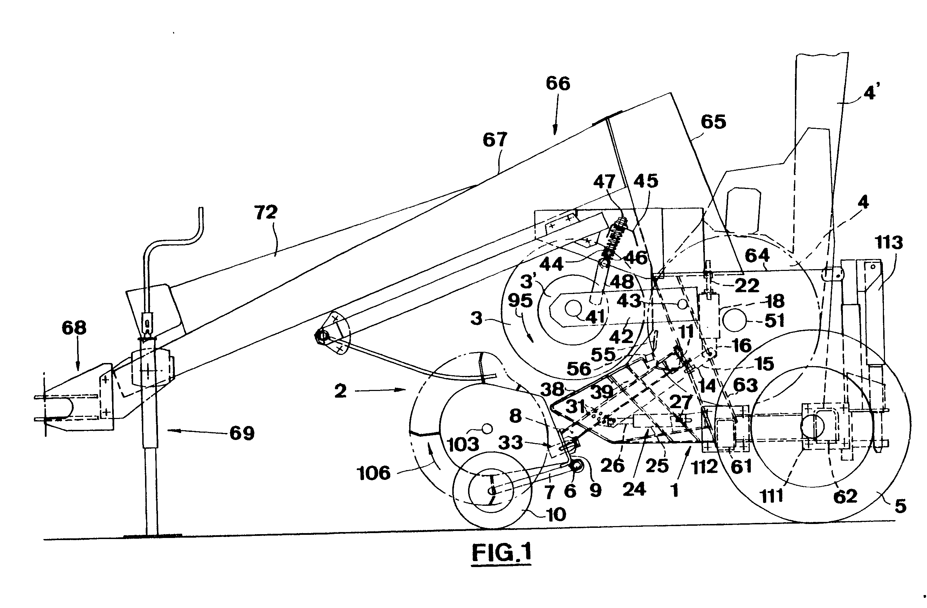

Referring to Figures 1 to 6, the forage harvester comprises a frame or chassis 1 on which are mounted a crop receiving means in the form of a conventional pick-up device 2, an auger structure including an auger trough 38 and an auger 3 associated therewith and to which in use the pickup device 2 feeds crop material, a cutterhead 4 and a partially pivotal delivery or discharge spout 4'. A pair of ground-engaging wheels 5 is fitted to the frame 1 and the pick-up device 2 is provided with a wheel 10 which can be raised and lowered about a pivot shaft 6 to which it is connected by an arm 7. When in the lowered, operative position, the wheel 10 contacts the ground and follows the ground contour, whereby it raises and lowers the pick-up device 2 accordingly so that the latter maintains a substantially constant ground clearance.

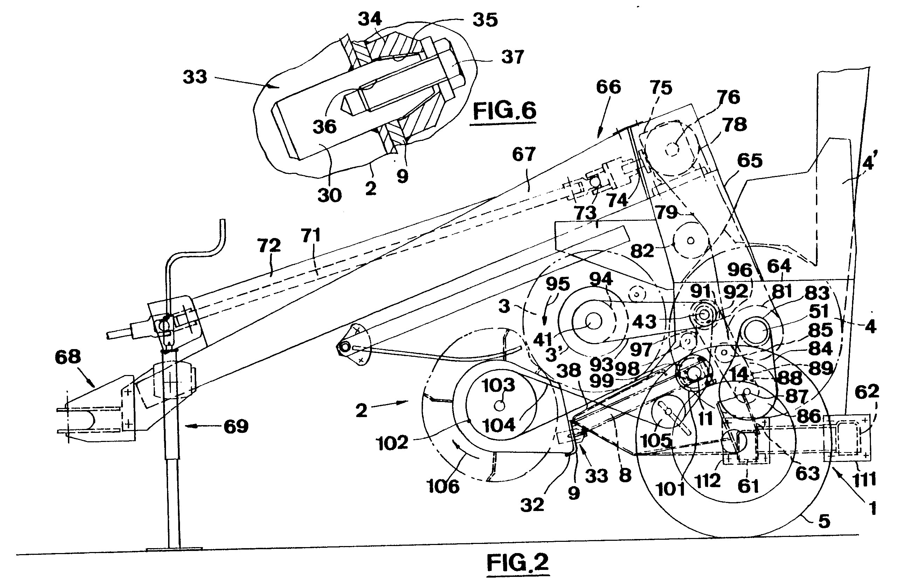

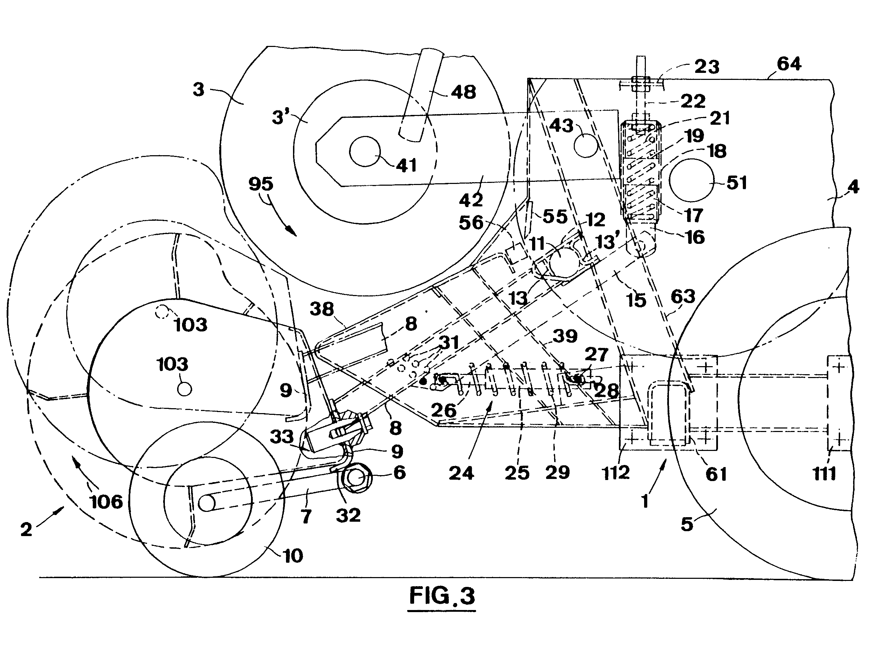

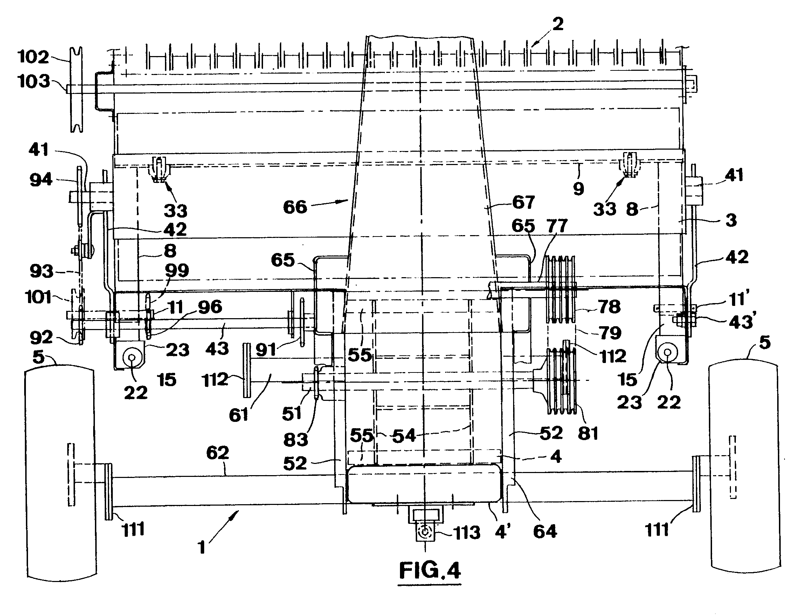

Generally vertical movement of the pick-up device 2 necessary to maintain this ground clearance is permitted by the mounting arrangement for the device which comprises a frame including a pair of relatively long arms 8 each attached at the forward end to a bracket 9 and pivotally attached at the other end to a pivot 11 or 11' via a generally U-shaped bracket 12 (best seen in Figure 3) having an insert 13 for contact with a portion of the pivot shaft and closeable by another insert 13' which is also U-shaped and contacts another portion of the pivot shaft; the inserts together defining a partial bush for the pivot shaft. The insert 13' is held in position by a headed pin 14 (Figures 1 and 2) which extends through aligned holes in the limbs of the brackets 12 and the limbs of the insert 13' and which is retained by a split pin (not shown) engageable with an aperture in the end of the pin 14. Each arm 8 is provided with an extension 15 the outer end of which is pivotally attached to a short link 16 connected to the exterior of the base of a cup 17 (Figure 3) slidably mounted in one end of a cylinder 18. A further cup 19 is attached to the distal end of the cylinder 18 with the two cups 17 and 19 being arranged to receive therebetween a compression spring 21. It should be noted that the right-hand pivot 11' (Figure 4) is in the form of a spigot attached to the frame 1, whereas the left-hand pivot 11 is in the form of a shaft rotatably mounted on the frame.

The pick-up device is resiliently suspended in a manner floatingly to follow the ground contour by the cylinder and spring arrangements 18, 21; the extent of resilient suspension or compensation of each arrangement being adjustable by a threaded rod 22 connected at one end to the further cup 19 and at the other end received in a bracket 23 attached to the frame I.

The pick-up device 2 is movable between a lowered, operative position (shown in full lines in Figures 1 and 3) and a raised, transport position (shown in full lines in Figure 2 and broken lines in Figure 3) by a single-acting hydraulic actuator 24 (Figures 1 and 3), the cylinder 25 of which is pivotally connected to the frame 1 and the piston 26 of which is pivotally connected to one of the pick-up arms 8. The pivotal attachment of the cylinder 25 to the frame 1 is effected by a pivot pin 27 extending from the cylinder 25 and being both slidably and rotatably received in a slot 28 formed in the frame 1, which provides a lost motion connection. In the operative position of the pick-up device 2, the pin 27 is arranged to be positioned intermediate the ends of the slot 28, whereby it can slide therein in response to movement of the pick-up device in following the ground contour without the necessitiy for any extension and/or contraction of the piston 26. When the actuator 24 is energised, the cylinder 25 first moves to the right (as seen in Figures 1 and 3) until the pin 27 engages one end of the slot 28, whereupon the piston 26 is extended and the pick-up device 2 raised to the transport position. When the pick-up device 2 is required in the operative position, the actuator 24 is de-energised to allow the pick-up to lower, retraction of the piston 26 being assisted by a spring 29 (Figure 3).

A plurality of apertures 31 is provided by which the point of connection of the piston 26 to the pick-up mounting can be adjusted to suit the required working height of the pick-up device 2. The use of relatively long mounting arms 8 for the pick-up device 2 enables the pivot shaft 11 therefore to be located as far rearwardly of the machine as possible in order to impart substantially rectilinear movement to the pick-up when it moves to and from the operative position. This prevents the pick-up 2 fouling the auger 3 when moved to the inoperative position. From an analysis of e.g. Figure 3 it also will be appreciated that the relative position of the pivot II-II' and the orientation of the arms 8 also are benificial for the pick-up 2 to avoid fouling the auger 3 when moved to the inoperative position. This pivot axis II-II' is provided at a relatively raised position whereby, when the pick-up 2 is in the operative position, said arms 8 extend forwardly and downwardly from said pivot axis 11, II' and whereby the aforementioned substantially rectilinear movement of the pick-up 2 to the transport position is inclined forwardly, i.e. away from the auger 3.

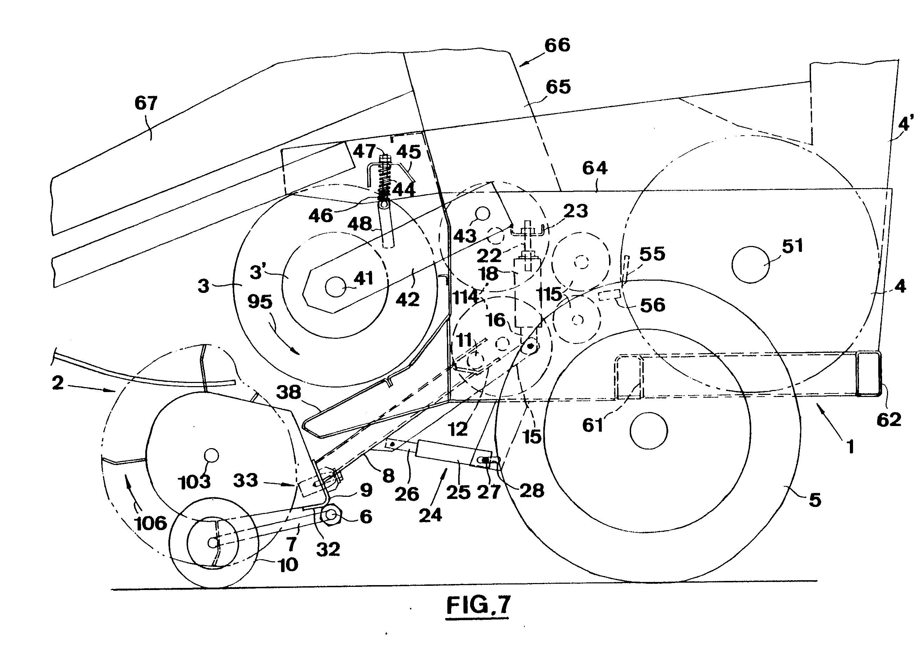

The bracket 9 is provided with a forwardly-extending lip or flange 32 which provides a seat for the pick-up device 2; more specific location and attachment being provided by two transversely-spaced, releasable connectors 33 shown in detail in Figure 6. Each connector 33 comprises a female socket 34 attached to the bracket 9 and having a conical through-bore 35. A correspondingly shaped male spigot 30 is provided on the pick-up device 2 having a threaded bore 36 for reception of a securing bolt 37. The connectors 33 provide very positive mounting and location devices which are simple to operate for the mounting and detachment of the pick-up device 2.

The auger 3 receives crop material from the pick-up device 2 and transfers it to the cutterhead 4 in cooperation with an auger floor or trough 38 attached to members 39 forming part of the frame 1. The auger 3, contrary to some known arrangements, is mounted independently of the pick-up device 2 and is mounted relative to the cutterhead 4 in order to optimise feeding of crop material to the latter which is critical for efficient operation of the forage harvester. Although the auger 3 is essentially fixed relative to the cutterhead 4, it is capable of a small amount of relative movement both with respect to the cutterhead and to the floor 38 in order to accommodate any relatively large lumps of crop material fed to the latter. This movement is provided for by mounting each end of the auger shaft 41 on one end of an arm 42, the other end of which is attached to a pivot 43 or 43' (Figure 1). Auger movement is damped by a pair of springs 44 (Figure 1), one provided at each end of the auger. Each spring 44 acts between a bracket 45 attached to the frame 1 and an abutment 46 carried by a rod 47 which passes through the spring. The rod 47 is slidably received at one end in the bracket 45 and pivotally attached at the other end to a link 48 fixed intenmediate the ends of the associated arm 42. It should be noted that the right-hand pivot 43' (Figure 4) is in the form of a bolt carried by the frame 1, whereas the left-hand pivot 43 is a shaft mounted for rotation on the frame 1 and extending from the adjacent side of the cutterhead 4 to the left-hand side of the machine.

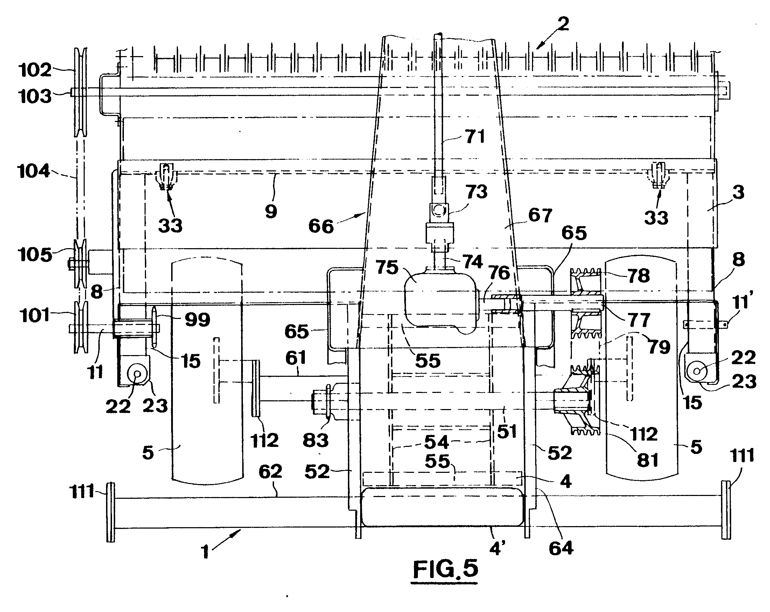

The cutterhead 4 is conventional and comprises a drive shaft 51 rotatably mounted in sidewalls 52 of the housing or casing 64 and carrying a pair of flanges 54 to the outer circumference of which are attached knives 55 which cooperate with a shear-bar 56 (Figure 1 and 3). It should be noted that the cutterhead 4 is shown more fully in Figures 4 and 5 but only in general outline in the remaining figures.

Looking now more closely at the frame 1, this comprises two transverse main beams 61, 62 spaced longitudinally of the machine. From the foremost beam 61 there extend two members 63 which support the overall casing 64 of the machine. From the top of the casing 64 there extend two forwardly and upwardly inclined members 65 forming part of a drawbar 66 for the machine. The members 65 are spaced apart transversely of the machine and between them is rigidly fixed the main portion 67 of they drawbar which is of a hollow construction and formed from plates bolted or otherwise secured together. The main drawbar portion 67 extends forwardly and downwardly from the members 65 over the auger 3 and pick-up device 2 and tapers towards the front end both in width and in height as seen in Figures 1 and 2 and Figures 4 and 5, repectively. The main drawbar portion 67 terminates in a conventional hitch 68 for connection to a tractor or other towing vehicle (not shown). A jack 69 is fitted towards the front end of the drawbar 66 to support the machine when unhitched as shown in Figure 1.

Drive for the various components of the forage harvester is provided from the power-take-off (PTO) shaft of the tractor or other towing vehicle which is connected to a main drive shaft 71 (Figures 2 and 5) of the machine which extends in a non-parallel relationship with the main drawbar portion 67, whereby the forward portion of the shaft is contained within an extension 72 of the main drawbar portion with the remainder being accomodated within the latter.

The drive shaft 71 is connected via a universal joint 73 to an input shaft 74 of a gearbox 75 mounted in the rear, upper portion of the drawbar 66. An output shaft 76 of the gearbox 75 extends transversely of the machine and is connected to a shaft 77 carrying a pulley 78. The drives for the forage harvester components are essentially conventional and will, therefore, be described only briefly. Furthermore the drives are split between several figures of the drawings in order not to obscure any given figure.

A belt 79 (Figures 2 and 5) extends from around the pulley 78 to a pulley 81 on one end of the cutterhead shaft 51, whereby the latter is driven; a tension pulley 82 being provided. The cutterhead shaft 51 also carries a sprocket 83 at its other end from which a chain 84 extends, via an idler sprocket 85, to a larger diameter sprocket 86 (not shown in Figure 4) carried by an idler shaft 87. The idler shaft 87 in fact carries a double sprocket, the second sprocket 88 being of smaller diameter than the first sprocket 86. A chain 89 extends from around the sprocket 88 to another sprocket 91 carried by the auger pivot shaft 43 to drive the same. A second sprocket 92 provided on the end of the pivot shaft 43 has a chain 93 extending therearound to a sprocket 94 carried by the auger shaft 41 which is thus driven in the desired direction indicated by the arrow 95. A third sprocket 96 is carried by the auger pivot shaft 43 and forms part of the drive for the pick-up device 2. A chain 97 extends from the sprocket 96, via an idler sprocket 98, to a sprocket 99 mounted on the pick-up pivot shaft 11 which also carries a pulley 101. A pulley 102 is provided on a drive shaft 103 for the pick-up device 2 and a crossed belt 104 extends between the pulleys 101 and 102 via an adjustable tension pulley 105. The belt 104 is crossed in order to drive the pick-up device 2 in a direction 106 opposite to that in which the auger 3 is driven.

As already mentioned, the relatively long arms 8 give substantially rectilinear movement to the pick-up device 2 as it is moved to and from the transport position. If relatively short anms were to be employed, the pick-up movement would be more acurate with a resulting tendency for the pick-up to foul the auger 3 on being raised unless adequate spacing of these two components were provided which would detract from the crop feeding operation therebetween. The minimum transport height of the pick-up device is typically 10 inches (25 centimeters).

The long arms 8 also serve to position the pick-up pivot axis generally vertically below the auger pivot axis which helps considerably in simplyfying the drive layout for the driven components. The extensions 15 of the arms 8 are arranged to extend only a relatively short distance from the pick-up pivot axis to the links 16. In this way, any movement of the pick-up device 2 about its pivot axis II-II' in following the ground contour results in a very much smaller movement of the links 16 and hence the associated springs 17. Thus a very constant compensation rate is achieved which would not be the case if large extensions and contractions of the springs 17 were occasioned as the spring characteristics thereof would vary.

It will be noted that the leading edge of the auger trough 38 is disposed generally vertically below the leading edge of the auger tube 3' to which the auger flights are attached, the flights being of opposite hand and being separated by feeder means (not shown), as is conventional, to feed the crop material to the cutterhead 4. It will also be noted that, in its operative position, the pick-up device 2 has its discharge end in close proximity to, although positioned slightly above, the level of the forward edge of the auger trough 38.

The embodiment of Figures 1 to 6 is known as a "fine chop" machine but the invention is equally applicable to a "precision chop" machine which employs feed rolls between the auger and the cutterhead. A "precision chop" machine is sbown in Figure 7 of the drawings and it will be noted that this machine is basically the same as that of Figures 1 to 6 (1ike components being accorded the same reference numerals) in as much as it comprises an identical pick-up device 2, auger structure 3, 38 and cutterhead 4 although the latter is spaced further from the auger structure 3, 38 in order to accomodate the feed rolls. The feed rolls comprise a forward pair of rolls 114 and a pair of rearward rolls 115 of smaller diameter. The auger structure, including the auger trough 38 and the auger 3 associated therewith is located with respect to the forward feed rolls 114 such that optimum feeding of crop material is effected although, as before, a small movement of the auger can take place in order to accomodate any lumps of crop material fed thereto.

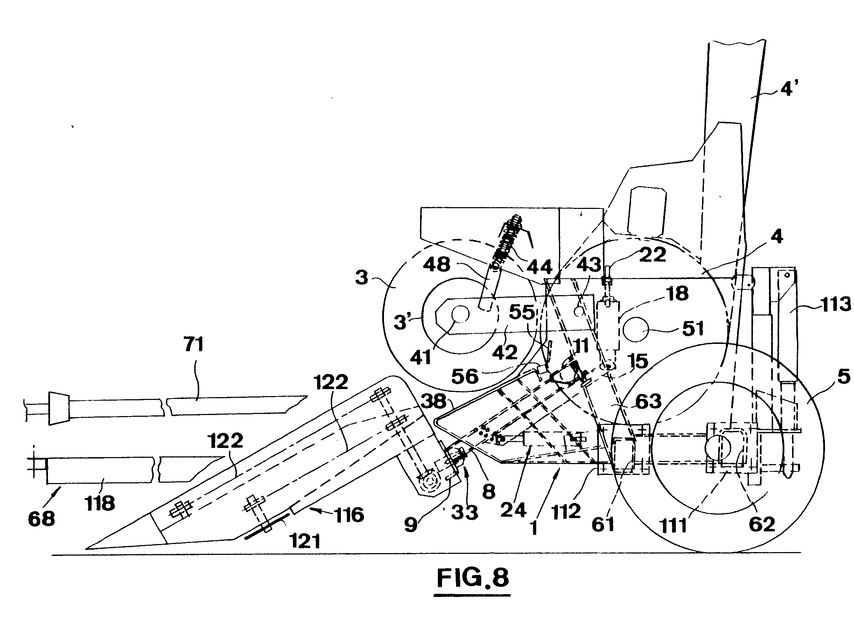

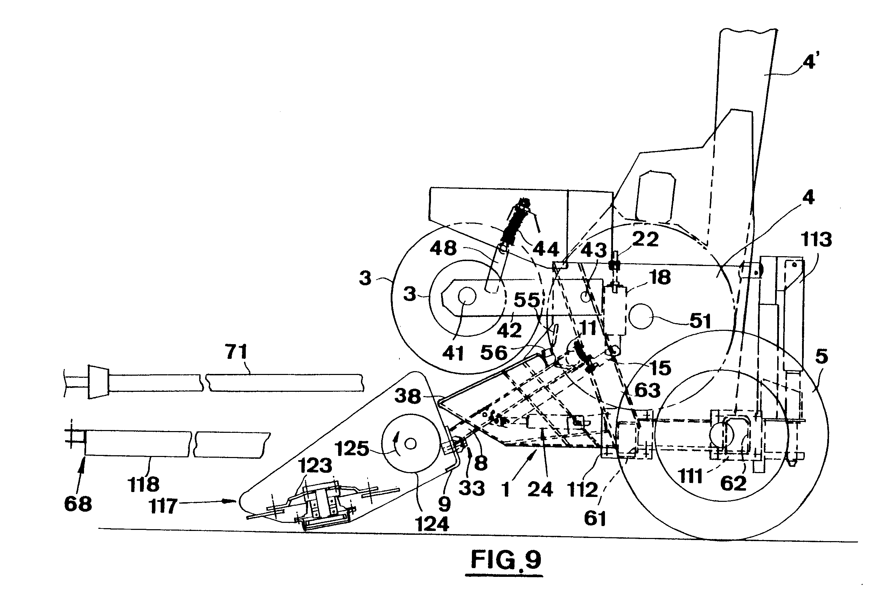

The type of crop receiving means 2 can be varied to suit the crop being harvested. The pick-up device 2 of the embodiments of Figures 1 and 7 is the conventional device for picking up windrowed crop material but may be replaced by a row crop attachment 116 (Figure 8) or cutterbar attachment 117 (Figure 9). In general, the embodiments of Figures 8 and 9 are similar to that of Figure 1 and like components are accorded the same reference numerals.

The row crop attachment 116 may comprise one of more row units, each of which is equipped with crop severing means 121 and crop conveyor means 122. The crop severing and crop conveyor means may be of the conventional type. In the arrangement shown in Figure 8, the crop conveyor means 122 comprise upper and lower conveyor chains. With the row crop attachment in the operative position, the lower conveyor chains have their discharge ends in proximity to, and at a level slightly above, the leading edge of the auger trough 38.

The cutterbar attachment 117 as shown in Figure 9 comprises mower means 123 of the disc type and which are disposed to cut standing crop and to propel it generally rearwardly and upwardly over the mower discs 3, 38. A conveyor assist means in the form of a transverse conveyor roll 124 extends generally rearwardly of the cutting zone of the mower means 123 and in proximity to, and generally below, the leading edge of the auger trough 38 when the attachment 116 is in its operative position. The conveyor roll 124 is rotatable in the direction 125 and is operable to receive crop material from the mower discs as it is propelled rearwardly thereby and to transfer the same overtop into the gap between the auger 3 and the auger trough 38. Conveyor ribs or the like may be provided on the surface of the conveyor roll 124 to improve the grip of the conveyor roll on the crop material.

The two main differences of both the arrangements including either the row crop attachment 116 or the cutterbar attachment 117 in comparison with the arrangement including the pick-up device are firstly the change in the crop receiving means already mentioned and secondly the use of a conventional pivotable drawbar 118 which is required with both of the former arrangements because standing crop is harvested by the machine, whereby it is necessary to offset the machine to one side of the tractor as otherwise the latter would damage the crop before it is acted upon by the row crop attachment or cutterbar. The connectors 33 permit ready detachment of one crop receiving means and attachment of another. It will be noted that the row crop attachment 116 and cutterbar attachment 117 are each pivotally mounted by the arms 8 as before, whereby they move relative to the auger structure 3, 38 in following the ground contour or in moving between the operative and transport positions.

This means that the auger structure 3, 38 is fixed relative to the cutterhead 4 or the feedrolls 114, as appropriate, save for the ability of the auger 3 to move relative to the trough 38 when lumps of crop material are encountered. Thus the structure 3, 38 can be mounted in the optimum position with respect to the cutterhead 4 or feed rolls 114 to maximise the capacity and efficiency of the machine.

Aspects of the forage harvester as described herein are claimed in the co-pending patent application EP-A-0.119.658.

**Claims**

1. A forage harvester comprising:
- a frame (1)
- a cutterhead (4) mounted on the frame (1),
- an auger structure (3, 38) including an auger trough (38) fixedly positioned on the frame (1) and an auger (3) rotatably mounted on the frame (1) and cooperable with the auger trough (38) to consolidate crop material transversely of the machine and to deliver said crop material rearwardly of the machine for processing by the cutterhead (4),
- and a crop receiving means (2) provided at a location generally in front of and in proximity to the leading edge of the auger trough (38) and mounted for pivotal movement about a pivot axis (11, 11') on the frame and relative to the auger structure (3, 38) in a manner to permit, in use, said crop receiving means (2) to follow the ground contour while receiving crop material from the ground and delivering it to the auger structure (3, 38),
characterised in that
the pivot axis (11, 11') of said crop receiving means (2) is provided rearwardly of the auger (3) in a manner to permit the crop receiving means (2) both to be disposed in an efficient working relationship with the auger structure (3, 38) when in the operative position and to be pivoted about said pivot axis (11, 11') to a raised transport position without fouling the auger structure (3, 38) by virtue of said pivotal movement of the crop receiving means (2) between the operative and transport positions being substantially rectilinear.

2. A forage harvester according to claim 1, characterised in that the crop receiving means (2) is arranged such that, when positioned in its operative position, it has its discharge end in close proximity to and slightly above the level of the leading edge of the auger trough (38).

3. A forage harvester according to claim 1 or 2 characterised in that the forward edge of the auger trough (38) is disposed below and between the leading edge of the auger (3) and the axis of rotation (41) of the auger (3).

4. A forage harvester according to any of the claims 1 to 3, characterised in that the leading edge of the auger trough (38) is disposed generally vertically below the leading edge of the auger tube (3') to which the auger flights are attached.

5. A forage harvester according to any of the claims 1 to 4 characterised in that the crop receiving means (2) is mounted for pivotal movement on the machine frame (1) through the intermediary of a mounting frame (8, 9) including a pair of arms (8) extending between the pivot axis (11, 11') and said crop receiving means (2); said pivot axis (11, 11') being positioned on the machine frame (1) such that, when the crop receiving means (2) is in the operative position, said arms (8) extend forwardly and downwardly from said pivot axis (11, 11').

6. A forage harvester according to claim 5 characterised in that the arms (8) of the mounting frame (8, 9) are interconnected at their ends remote from the pivot axis (11, 11') by a mounting bracket (9) for the crop receiving means (2); said mounting bracket (9) having a flange (32) for supporting the crop receiving means (2) and releasable connector means (33) being provided on the mounting bracket (9) and the crop receiving means (2) to attach the crop receiving means (9) to the mounting bracket (9).

7. A forage harvester according to claim 5 or 6, characterised in that at least one arm (8) of the mounting frame (8, 9) is extended rearwardly by a distance shorter than the length of the arms (8), and in that compensation means (17, 18, 19, 21) are provided between the at least one extension (15) and the frame (1) of the machine; the arrangement being such that for a given pivotal movement of the crop receiving means (2) there is a smaller movement of the at least one extension (15) whereby the compensation characteristics of the compensation means (17, 18, 19, 21) remain substantially constant.

8. A forage harvester according to claim 7, characterised in that the crop receiving means (2) is movable to the raised transport position by an actuator (24) including a piston (26) and a cylinder (25) and which acts between the mounting frame (8, 9) and the machine frame (1); said actuator (24) being of the single acting type and retraction of the piston (26) thereof being assisted by a spring (28) and further, said actuator (24) also being connected via a lost motion connection (27, 28) to either the mounting frame (8,9) or the machine frame (1) whereby a limited amount of pivotal movement of the crop receiving means (2) relative to the machine frame (1) is permitted without any corresponding extension and/or retraction of the piston (26) taking place.

9. A forage harvester according to any of the preceding claims, characterised in that the auger structure (3, 38) is operable to feed crop material direct to the cutterhead (4).

10. A forage harvester according to any of the preceding claims, characterised in that the auger (3) is pivotally mounted relative to the auger trough (38); the auger (3) being provided between a pair of arms (42) which rotatably receive the auger (3) at one end and which are pivotally attached to the machine frame (1) at the other end (43, 43') and the pivotal movement of the auger (3) being damped by spring means (44) acting between the arms (42) and the machine frame (1).

11. A forage harvester according to claim 10, characterised in that the pivot axis (11, 11') of the crop receiving means (2) on the machine frame (1) is disposed generally vertically below the pivot axis (43, 43') of the auger (3) on the machine frame (1).

12. A forage harvester according to any of the preceding claims, characterised in that the crop receiving means (2) is in the form of a pick-up device for picking-up windrowed crop.

13. A forage harvester according to any of the claims 1 to 11, characterised in that the crop receiving means (2) is of the type for harvesting standing crop.

## Patentansprüche

1. Feldhäcksler mit:
- einem Rahmen (1),
- einer Schneidetrommel (4), die auf dem Rahmen (1) befestigt ist,
- einer Förderschneckenstruktur (3, 38) mit einer Förderschneckenwanne (38), die in einer festen Position auf dem Rahmen (1) angeordnet ist, und mit einer Förderschnecke (3), die drehbar an dem Rahmen (1) befestigt ist und mit der Förderschneckenwanne (38) zusammenwirkt, um Erntematerial in Querrichtung der Maschine zu verdichten und das Erntematerial in Rückwärtsrichtung der Maschine zur Verarbeitung durch die Schneidetrommel (4) zuzuführen, und mit
- einer Erntematerial-Aufnahmeeinrichtung (2), die an einer Stelle allgemein vor und in der Nähe der Vorderkante der Förderschneckenwanne (38) angeordnet ist und für eine Schwenkbewegung um eine Schwenkachse (11, 11') auf dem Rahmen und bezüglich der Förderschneckenstruktur (3, 38) derart befestigt ist, daß im Betrieb die Erntematerial-Aufnahmeeinrichtung (2) der Bodenkontur folgen kann, während sie Erntematerial von dem Boden aufnimmt und es der Förderschneckenstruktur (3, 38) zuführt, dadurch gekennzeichnet, daß die Schwenkachse (11, 11') der Erntematerial-Aufnahmeeinrichtung (2) rückwärts von der Förderschnecke (3) derart angeordnet ist, daß die Erntematerial-Aufnahmeeinrichtung (2) sowohl in einer wirkungsvollen Arbeitsbeziehung mit der Förderschneckenstruktur (3, 38) angeordnet werden kann, wenn sie sich in der Betriebstellung befindet, als auch um die Schwenkachse (11, 11') in eine angehobene Transportposition verschwenkbar ist, ohne an der Förderschneckenstruktur (3, 38) anzustoßen, weil die Schwenkbewegung der Erntemateterial-Aufnahmeeinrichtung (2) zwischen den Betriebs- und Transportpositionen im wesentlichen geradlinig ist.

2. Feldhäcksler nach Anspruch 1, dadurch gekennzeichnet, daß die Erntematerial- Aufnahmeeinrichtung (2) derart ausgebildet ist, daß wenn sie sich in ihrer Betriebsstellung befindet, ihr Auslaßende in enger Nachbarschaft und geringfügig über der Höhenlage der Vorderkante der Förderschneckenwanne (38) angeordnet ist.

3. Feldhäcksler nach Anspruch 1 oder 2, dadurch gekennzeichnet, daß die Vorderkante der Förderschneckenwanne (38) unterhalb und zwischen der Vorderkante der Förderschnecke (3) und der Drehachse (41) der Förderschnecke (3) angeordnet ist.

4. Feldhäcksler nach einem der Ansprüche 1-3, dadurch gekennzeichnet, daß die Vorderkante der Förderschneckenwanne (38) allgemein in Vertilalrichtung unter der Vorderkante des Förderschneckenrohres (3') angeordnet ist, an dem die Schaufelleisten der Förderschnecke befestigt sind.

5. Feldhäcksler nach einem der Ansprüche 1-4, dadurch gekennzeichnet, daß die Erntematerial-Aufnahmeeinrichtung (2) für eine Schwenkbewegung auf dem Maschinenrahmen (1) mit Hilfe eines Befestigungsrahmens (8, 9) befestigt ist, der zwei Arme (8) einschließt, die sich zwischen der Schwenkachse (11, 11') und der Erntematerial-Aufnahmeeinrichtung (2) erstrecken, und daß die Schwenkachse (11, 11') auf dem Maschinenrahmen (1) derart angeordnet ist, daß wenn sich die Erntematerial-Aufnahmeeinrichtung (2) in der Betriebsstellung befindet, die Arme (8) sich nach vorne und nach unten von der Schwenkachse (11, 11') aus erstrecken.

6. Feldhäcksler nach Anspruch 5, dadurch gekennzeichnet, daß die Arme (8) des Befestigungsrahmens (8, 9) an ihren von der Schwenkachse (11, 11') entfernten Enden durch einen Befestigungshaltearm (9) für die Erntematerial-Aufnahmeeinrichtung (2) miteinander verbunden sind, daß der ßefestigungshaltearm (9) einen Flansch (32) zur Halterung der Erntematerial-Aufnahmeeinrichtun (2) aufweist und daß lösbare Verbinddungseinrichtungen (33) an dem Befestigungshaltearm (9) und der Erntematerial- Aufnahmeeinrichtung (2) vorgesehen sind, um die Erntematerial- Aufnahmeeinrichtung (2) an dem Befestigungshaltearm (9) zu befestigen.

7. Feldhäcksler nach Anspruch 5 oder 6, dadurch gekennzeichnet, daß zumindestens ein Arm (8) des Befestigungsrahmens (8, 9) nach hinten hin über eine Strecke verlängert ist, die kürzer als die Länge der Arme (8) ist, und daß Kompensationseinrichtungen (17, 18, 19, 21) zwischen der zumindestens einen Verlängerung (15) und dem Rahmen (1) der Maschine vorgesehen sind, wobei die Anordnung derart ist, daß für eine vorgegebene Schwenkbewegung der Erntematerial- Aufnahmeeinrichtuhg (2) eine kleinere Bewegung der zumindestens einen Verlängerung (15) auftritt, sodaß die Kompensationscharakteristik der Kompensationseinrichtungen (17, 18, 19, 21) im wesentlichen konstant bleibt.

8. Feldhäcksler nach Anspruch 7, dadurch gekennzeichnet, daß die Erntematerial- Aufnahmeeinrichtung (2) in die angehobene Transportposition mit Hilfe eines Stellgliedes (24) beweglich ist, das einen Kolben (26) und einen Zylinder (25) einschließt und zwischen dem Befestigungsrahmen (8, 9) und dem Maschinenrahmen (1) wirkt, daß das Stellglied (24) vom einzelwirkenden Typ ist und das Zurückziehen des Kolbens (26) des Stellgliedes durch eine Feder (28) unterstützt wird, und daß das Stellglied (24) weiterhin über eine Totgangverbindung (27, 28) mit entweder dem ßefestigungsrahmen (8, 9) oder dem Maschinenrahmem (1) verbunden ist, sodaß eine begrenzte Schwenkbewegung der Erntematerial-Aufnahmeeinrichtung (2) gegenüber dem Maschinenrahmen möglich ist, ohne daß eine entsprechende Ausfahr- oder Einfahrbewegung des Kolbens (26) erfolgt.

9. Feldhäcksler nach einem der vorhergehenden Ansprüche, dadurch gekennzeichnet, daß die Förderschneckenstruktur (3, 38) Erntematerial direkt der Schneidetrommel (4) zuführt.

10. Feldhäcksler nach einem der vorhergehenden Anspruche, dadurch gekennzeichnet, daß die Förderschnecke (3) schwenkbar gegenüber der Förderschneckenwanne (8) befestigt ist, daß die Förderschnecke (3) zwischen zwei Armen (42) angeordnet ist, die die Förderschnecke (3) an einem Ende drehbar aufnehmen und am anderen Ende (43, 43') schwenkbar an dem Maschinenrahmen (1) befestigt sind, und daß die Schwenkbewegung der Förderschnecke (3) durch Federeinrichtungen (44) gedämpft ist, die zwischen den Armen (42) und dem Maschinenrahmen (1) wirken.

11. Feldhäcksler nach Anspruch 10, dadurchgekennzeichnet, daß die Schwenkachse (11, 11') der Erntematerial-Aufnahmeeinrichtung (2) auf dem Maschinenrahmen (1) allgemein in Vertikalrichtung unter der Schwenkachse (43, 43') der Förderschnecke (3) auf dem Maschinenrahmen (1) angeordnet ist.

12. Feldhäcksler nach einem der vorhergehenden Ansprüche, dadurch gekennzeichnet, daß die Erntematerial-Aufnahmeeinrichtung (2) eine Aufnahmeeinrichtung zur Aufnahme von in Schwaden befindlichem Erntematerial aufweist. ·

13. Feldhäcksler nach einem der Ansprüche 1-11, dadurch gekennzeichnet, daß die Erntematerial-Aufnahmeeinrichtung (2) vom Typ zur Ernte von stehendem Erntematerial ist.

**Revendications**

1. Récolteuse-hacheuse de fourrage comportant:
- un châssis (1),
- une barre de coupe (4) montée sur le châssis (1),
- une structure de vis sans fin (3, 38) comprenant une auge de vis sans fin (38) disposée d'une manière fixe sur le châssis (1) et une vis sans fin (3) montée mobile en rotation sur le châssis (1) et apte à coopérer avec l'auge de vis sans fin (38) pour regrouper des produits de récolte transversalement à la machine et pour délivrer lesdits produits 10 de récolte à l'arrière de la machine en vue de leur traitement par la barre de coupe (4), et
- un moyen de réception de récolte (2) prévu en un point situé, d'une manière générale, devant le bord d'attaque de l'auge de vis sans fin (38) et à proximité de celui-ci, et monté en vue d'un mouvement pivotant autour d'un axe de pivotement (11, 11') sur le châssis et par rapport à la structure de vis sans fin (3, 38), de façon que ledit moyen de réception de récolte (2) puisse, en service, suivre les contours du sol tout en recevant des produits de récolte provenant du sol et en les délivrant à la structure de vis sans fin (3, 38),
- caractérisée en ce que l'axe de pivotement (11, 11') dudit moyen de réception de ré- colte (2) est disposé en arrière de la vis sans fin (3), de manière que le moyen de réception de récolte (2) puisse à la fois être placé dans une relation de travail efficace vis-à-vis de la structure de vis sans fin (3, 38), lorsqu'il se trouve dans la position active, et pivoter autour dudit axe de pivotement (11, 11') jusqu'à une position de transport relevée sans heurter la structure de vis sans fin (3, 38), grâce au fait que ledit mouvement pivotant du moyen de réception de récolte (2) entre les positions active et de transport est sensiblement rectiligne.

2. Récolteuse-hacheuse de fourrage selon la revendication 1, caractérisée en ce que le moyen de réception de récolte (2) est conçu de telle manière que, lorsqu'il se trouve dans sa position active, son ex- trémité d'évacuation est située tout près du bord d'attaque de l'auge de vis sans fin (38) et légèrement au-dessus du niveau de celui-ci.

3. Récolteuse-hacheuse de fourrage selon la revendication 1 ou 2, caractérisée en ce que le bord avant de l'auge de vis sans fin (38) est disposé au-dessous du bord d'attaque de la vis sans fin (3) et entre celui-ci et l'axe de rotation (41) de la vis sans fin (3).

4. Récolteuse-hacheuse de fourrage selon l'une quelconque des revendications 1 à 3, caractérisée en ce que le bord d'attaque de l'auge de vis sans fin (38) est disposé, dans l'ensemble, verticalement au-des-sous du bord d'attaque du tube de vis sans fin (3') auquel les spires de vis sans fin sont fixées.

5. Récolteuse-hacheuse de fourrage selon l'une quelconque des revendications 1 à 4, caractérisée en ce que le moyen de réception de récolte (2) est monté en vue d'opérer un mouvement pivotant sur le châssis (1) de la machine par l'intermédiaire d'une armature de montage (8, 9) comportant deux bras (8) qui s'étendent entre l'axe de pivotement (11, 11') et ledit moyen de réception de récolte (2); ledit axe de pivotement (11, 11') étant positionné sur le châssis (1) de la machine de façon que, lorsque le moyen de réception de récolte (2) se trouve dans la position active, lesdits bras s'étendent vers l'avant et vers le bas depuis ledit axe de pivotement (11, 11').

6. Récolteuse-hacheuse de fourrage selon la revendication 5, caractérisée en ce que les bras (8) de l'armature de montage (8, 9) sont, au niveau de leurs extrémités éloignées de l'axe de pivotement (11, 11'), reliés entre eux par une patte de montage (9) destinée au moyen de réception de récolte (2); ladite patte de montage (9) étant munie d'une bride (32) en vue de supporter le moyen de réception de récolte (2), tandis que des moyens connecteurs détachables (33) sont prévus sur la patte de montage (9) et le moyen de réception de récolte (2) Pour fixer ce dernier à la patte de montage (9).

7. Récolteuse-hacheuse de fourrage selon la revendication 5 ou 6, caractérisée en ce que l'un au moins des bras (8) de l'armature de montage (8, 9) se prolonge vers l'arrière sur une distance inférieure à la longueur des bras (8), et en ce que des moyens compensateurs (17, 18, 19, 21) sont prévus entre ledit prolongement (15) et le châssis (1) de la machine; la disposition étant telle qu'à un mouvement pivotant donné du moyen de réception de récolte (2) correspond un déplacement moindre du prolongement (15), les caractéristiques de compensation des moyens compensateurs (17, 18, 19, 21) restant sensiblement constantes.

8. Récolteuse-hacheuse alt la revendication 7, caractérisée en ce que le moyen de réception de récolte (2) peut être déplacé jusqu'à la position de transport relevée ali moyen d'un organe d'actionnement (24) qui comprend un piston (26) et un cylindre (25) et agit entre l'armature de montage (8, 9) et le chassis (1) de la machine; ledit organe d'actionnement (24) étant du type à simple effet, tandis qu'une rétraction de son piston (26) est aidée par un ressort (28), et de surcroît, ledit organe d'actionnement (24) étant également accouplé, par l'intermédiaire d'un raccordement à course morte (27, 28) avec l'un ou l'autre du châssis de montage (8, 9) et du châssis (1) de la machine, pour qu'ainsi le moyen de réception de récolte (2) puisse opérer un mouvement pivotant d'une amplitude limitée par rapport au châssis (1) de la machine, sans donner lieu à une extension et/ou rétraction correspondante du piston (26).

9. Recolteuse-hacheuse de fourrage selon l'une quelconque des revendications précédentes, caractérisée en ce que la structure de vis sans fin (3, 38) est apte à opérer pour délivrer des produits de récolte directement à la barre de coupe (4).

10. Récolteuse-hacheuse de fourrage selon l'une quelconque des revendications précédentes, caractérisée en ce que la vis sans fin (3) est montée pivotante vis-à-vis de l'auge de vis sans fin (38); la vis sans fin (3) étant disposée entre deux bras (42) qui, au niveau de l'une de leurs extrémités, recoivent la vis sans fin (3) d'une manière mobile en rotation et sont, au niveau de leur autre extrémité (43, 43') montés pivotants sur le châssis (1) de la machine, le mouvement pivotant de la vis sans fin (3) étant amorti par un moyen élastique (44) qui agit entre les bras (42) et le châssis (1) de la machine.

11. Récolteuse-hacheuse de fourrage selon la revendication 10, caractérisée en ce que l'axe de pivotement (11, 11') du moyen de réception de récolte (2) sur le châssis (1) de la machine, est disposé, dans l'ensemble, verticalement au-des-sous de l'axe de pivotement (43, 43') de la vis sans fin (3), sur le châssis (1) de la machine.

12. Récolteuse-hacheuse de fourrage selon l'une quelconque des revendications précédentes, caractérisée en ce que le moyen de réception de récolte (2) se présente sous la forme d'un dispositif de ramassage destiné à ramasser une récolte disposée en andains.

13. Récolteuse-hacheuse de fourrage selon l'une quelconque des revendications 1 à 11, caractérisée en ce que le moyen de réception de récolte (2) est du type destiné à récolter une récolte sur pied.

**FIG.1**

0 119 659

FIG.6

FIG.2

FIG.3

FIG.4

**FIG.5**

0 119 659

**FIG.7**

0 119 659

FIG.8

0 119 659

FIG.9